# EUROPEAN PATENT APPLICATION

(11) **EP 4 574 770 A1**
(43) Date of publication of application: **25.06.2025**
(21) Application number: 23217529.9
(22) Date of filing: 18.12.2023
(51) Int. Cl.: C02F 1/00, C02F 1/461, C02F 1/467, C02F 1/72, D06F 34/22, D06F 35/00, C02F 101/30, C02F 103/00

(54) **RECYCLING OF LAUNDRY WASTEWATER**

(71) Applicant: Miele & Cie. KG, 33332 Gütersloh (DE)
(72) Inventor: Ebke, Daniel, Dr., 33613 Bielefeld (DE); Strothoff, Werner, 48336 Sassenberg (DE); Oßwald, Sebastian, Winston-Salem NC, 27106 (US); Parda, Andrew, Providence, RI 02903 (US); Rosenblum, Yael, Cambridge, MA 02140 (US); Sun, Eric, Cambridge, MA 02141 (US)

(57) **Abstract**

The present disclosure provides a method of recycling laundry wastewater in which a water bearing electrical device determines the completion of a wash process and collects sensor data on the wastewater generated from the wash process. The water bearing electrical device determines a treatment for the wastewater and treats the wastewater with an electrochemical cell and then test the recycled wastewater. The water bearing electrical device determines if the recycled wastewater is properly treated to be used in future wash processes or if the water supply should be used in the next wash process or even discarded.

## Description

### FIELD OF THE DISCLOSURE

The present disclosure is generally related to recycling laundry wastewater.

### BACKGROUND

Currently, household appliances as well as professional used appliances for washing or cleaning textiles do not utilize a method of water treatment in which the wastewater may be treated to be used in additional wash cycles. Also, such systems do not provide a method of producing hydrogen peroxide to treat the textiles during the washing process. Lastly, most appliances with an ability to treat the water supply for a washing process do not provide a solution for the wastewater generated during the wash process. Thus, there is a need in the prior art to provide a method for recycling laundry wastewater.

### DESCRIPTIONS OF THE DRAWINGS

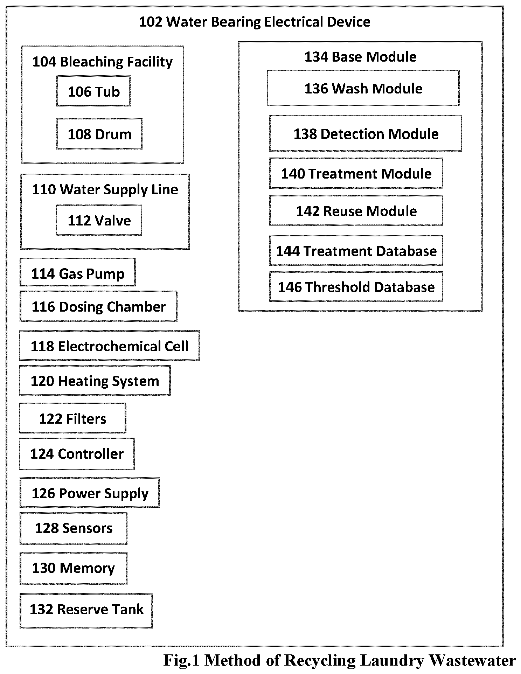

FIG. 1: Illustrates method of recycling laundry wastewater, according to an embodiment.
FIG. 2: Illustrates a Base Module, according to an embodiment.
FIG. 3: Illustrates a Wash Module, according to an embodiment.
FIG. 4: Illustrates a Detection Module, according to an embodiment.
FIG. 5: Illustrates a Treatment Module, according to an embodiment.
FIG. 6: Illustrates a Reuse Module, according to an embodiment.

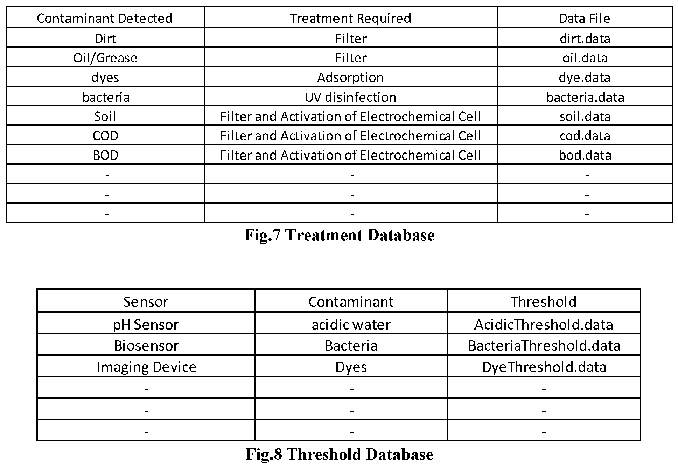

FIG. 7: Illustrates a Treatment Database, according to an embodiment.
FIG. 8: Illustrates a Threshold Database, according to an embodiment.

### DETAILED DESCRIPTION

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein. The examples set forth herein are non-limiting examples and are merely examples among other possible examples.

This is a method for a recycling laundry wastewater. This method comprises of a water bearing electrical device 102 in which cleaning is to be achieved using a bleaching agent, and a water-bearing electrical device which carries out cleaning using a bleaching agent, i.e., hydrogen peroxide produced from electrolysis, such as by a washing machine, a dishwasher, a type of household or professional disinfector appliance, etc. The water bearing electrical device 102 may include a bleaching facility 104 and an electrochemical cell 118 with a cathode arranged in a cathode chamber and an anode arranged in an anode chamber, which are spatially separated, having the following steps during a cleaning program, which includes a washing process and has several rinsing processes. First, providing a solution in the electrochemical cell which comprises water and an electrolyte. Second, applying a current to the electrochemical cell and simultaneously introducing an oxygen-containing gas to produce a bleach in a catholyte. Third, feeding the catholyte from the electrochemical cell into the bleaching facility 104 before and/or during the washing process. In the first step, a water and electrolyte containing solution is provided in the electrochemical cell 118, wherein the solution can be arranged in the electrochemical cell 118 or passed through it. The electrolyte can comprise or consist of an inorganic salt and/or a builder. The inorganic salt is preferably sodium sulfate and/or sodium hydrogen carbonate. In a preferred embodiment, the builder has one or more components selected from the group consisting of citric acid, lactic acid, phosphonate, polycarboxylic acid, aminocarboxylic acid, polyacrylic acid and/or their salts. Alternatively, the builder preferably consists of one or more of these components. In the second step, if the oxygen-containing gas is supplied to the electrochemical cell 118, which preferably has a gas diffusion electrode in the cathode space, and current is applied to it, an electrolysis starts in which a bleaching agent, such as hydrogen peroxide, is formed. Due to the spatial separation of the cathode and anode compartments, the anolyte and the catholyte are produced separately from one another. The pH of the catholyte is shifted into the alkaline pH range, while a pH value of the anolyte is shifted into the acidic pH range. If the anode compartment and the cathode compartment were not separated, the catholyte and the anolyte would at least partially neutralize each other, which has proven to be disadvantageous. A pH of the catholyte is preferably in the range from 9 to 14, more preferably 10 to 12. In the third step, only the catholyte is fed to the bleaching facility 104. In other words, the catholyte is fed to the bleaching facility 104 without an anolyte produced in the second step. The catholyte is anolyte-free. During the washing process, items to be cleaned or the bleaching facility 104 itself is washed with the bleaching agent produced, such as hydrogen peroxide produced from electrolysis, and, if necessary, other ingredients of the solution in order to clean it. During the one or more rinsing processes, the items to be cleaned or the bleaching facility 104 itself is rinsed with water in order to rinse the solution out of the bleaching facility 104 and possibly the items to be cleaned. In some embodiments, the method furthermore has a step of feeding the anolyte produced in the second step from the electrochemical cell 118 into the bleaching facility 104 after a washing process has been carried out. The anolyte produced in the second step is preferably fed to the bleaching facility 104 before and/or during the execution of a rinsing process from the electrochemical cell 118. By inserting the acidic anolyte solution into one of the wash cycles, any calcium deposits that may have formed in the water-conducting electrical device and/or on the items to be cleaned can be dissolved again. Hygiene is increased, since both alkaline and acidic pH values are run through in the water-bearing electrical device during a washing and rinsing cycle. The anolyte is therefore used sensibly. In some embodiments, the bleaching agent may refer to a chemical compound, may be hydrogen peroxide produced by an electrochemical process, such as by an electrochemical cell 118, may be an anolyte or catholyte resulting from or generated as an intermediary product during an electrochemical process. In some embodiments, the bleaching agent may remove dyes, contaminants, pathogens, etc. from textiles, fabrics, materials, surfaces, fluids, etc. For instance, a water bearing electrical device 102 such as a water bearing electrical device 102 of EP3865614A1. Further, embodiments may include a bleaching facility 104 which may contain a tub 106 and a drum 108 contained within the tub 106. The bleaching facility 104 may receive the catholyte produced from the first electrochemical cell 118 before and/or during a washing process via a supply line to clean the items stored in the drum 108. In some embodiments, after the washing process the anolyte produced by the second electrochemical cell 118 may be fed to the bleaching facility 104 before and/or during the execution of a rinsing process from the second electrochemical cell 118. By inserting the acidic anolyte solution into one of the wash cycles, any calcium deposits that may have formed in the water-conducting electrical device and/or on the items to be cleaned can be dissolved again. Hygiene is increased, since both alkaline and acidic pH values are run through in the water-bearing electrical device during a washing and rinsing cycle. For instance, a bleaching facility 104 such as a bleaching facility 104 of EP3865614A1. Further, embodiments may include a tub 106 that seals in the water of the water bearing electrical device 102 and may vibrate, shake, rotate, etc. by a motor and a counterweight in order to clean, wash, rinse, etc. the items contained in the drum 108 which may be contained within the tub 106. In some embodiments, the bleaching facility 104 may contain a tub 106 and drum 108, such as a washing machine. In some embodiments, the tub 106 may include a drain, drain line, drain pump, and drain valve to dispose of the wastewater created during the wash process. In some embodiments, the tub 106 may be drained or emptied of the wastewater by activating a drain valve located in a drain line connected to a drain entrance at the bottom of the tub 106. In some embodiments, the bleaching facility may only contain a tub 106 or water sealed drum 108, such as a dishwasher. In some embodiments, the bleaching facility may be used for a household or professional use disinfector appliance that may or may not include a tub 106 or drum 108. For instance, a tub 106 such as a tub 106 of US6841058B2. Further, embodiments may include a drum 108 that is contained within the tub 106 and is where the items to be cleaned are placed. The drum 108 may include sides that perforated with holes to allow water to enter and exit upon spinning the drum 108. For instance, a drum 108 such as a drum 108 of US6841058B2. Further, embodiments may include a water supply line 110 that connects to the electrochemical cell 118 to supply the water for the washing process. The water supply line 110 may include a valve 112 that may be opened or closed based on the control signals received from the controller 130 to feed the water to the electrochemical cell 118 for the wash cycle. The water supply line 110 may be connected to a water source, such as a water line for a household, building, or dwelling. In some embodiments, the water supply line 110 may be replaced with a water tank located within the water bearing electrical device 102 to supply the water to the electrochemical cell 118. In some embodiments, the water supply line 110 may include a pump, a pressurized source, etc. to move the water through the water supply line 110. For instance, a water supply line 110 such as a feed supply of US7950254B2. Further, embodiments may include a valve 112 for the water supply line 110 that may be opened or closed based on the control signals received from the controller 130 to feed the water to the electrochemical cell 118 for the wash cycle. In some embodiments, the valve 112 may be used to control the supply of water from a water tank or another source of water for the washing process or cycle. Further, embodiments may include a gas pump 114 which connects to the cathode through a gas supply line to supply air or oxygen to the cathode chamber. The gas pump 114 supplies air or oxygen as an oxygen-containing gas via a gas supply line to the cathode chamber and a current is applied to the electrochemical cell 118. Applying a current to the electrochemical cell 118 at the same time introducing an oxygen-containing gas, such as air, into the cathode space by activating the gas pump 114 generates hydrogen peroxide in the aqueous electrolyte-containing solution. For instance, a gas pump 114 such as an oxygen supply line of JP2005146344A. Further, embodiments may include a dosing chamber 116 which is designed to meter an electrolyte, for example an electrolyte-containing solution, such as a salt-containing solution, and possibly a detergent into the electrochemical cell 118 by means of a metering pump. When the electrochemical cell 118 is supplied with water in a predetermined quantity, the electrolyte, such as a solution containing salt, and possibly a detergent is metered from the dosing chamber 116 into the electrochemical cell 118 via the metering pump. In some embodiments, the dosing chamber 116 may provide the electrolyte to the electrochemical cell 118 through a pipe, hose, tubing, etc. In some embodiments, the dosing chamber 116 may be replaced with a dosing pump, metering pump, etc. to provide the electrolyte to the electrochemical cell 118. In some embodiments, the electrolytes may include sodium, chloride, potassium, magnesium, calcium, etc. For instance, a dosing chamber 116 such as a dosing chamber 116 of EP2798995B1. Further, embodiments may include an electrochemical cell 118 with a cathode compartment and an anode compartment, that provides an aqueous electrolyte-containing solution in the electrochemical cell 118 and applies a current to the electrochemical cell 118 and simultaneously introduces an oxygen-containing gas to generate hydrogen peroxide in the aqueous electrolyte-containing solution. Then the electroylated solution is fed from the electrochemical cell 118 into the bleaching device and a bleach activator is fed into the electrochemical cell 118 and/or the bleaching facility 104. The electrochemical cell 118 is designed to produce a hydrogen peroxide-containing bleaching agent using the electrolyte, water, air and electric current. If the electrochemical cell 118 has the electrolyte, water and air and an electric current flow, water is oxidized at an anode of the electrochemical cell, with protons being formed. At the same time, the oxygen contained in the air is reduced at a cathode of the electrochemical cell 118, in particular a gas diffusion electrode. The protons are used up, for example, the protons combine with the electrons to form hydrogen, and hydrogen peroxide is produced. The cathode is preferably designed as an oxygen diffusion electrode. The anode can be a dimensionally stable anode, a mixed oxide electrode or a boron-doped diamond electrode. The reaction product of electrolysis is a hydrogen peroxide solution. An anode compartment in which the anode is located and a cathode compartment in which the cathode is located are preferred, for example, through a membrane such as a cation exchange membrane spatially separated, so that an alkaline hydrogen peroxide solution is preferably produced. The electrode, such as diamond electrode, of the reactor is preferably boron- or nitrogen-doped. One or more of the electrodes may be a boron-doped diamond electrode, such as diamond electrodes which have a possibly doped diamond layer applied to a carrier material. The diamond electrode may function as an anode or a cathode in the process, the reactor having a counter electrode of a suitable material, such as steel, which may also form the reactor itself. It is also possible that the reactor has two diamond electrodes which function as anode and cathode. The reactor therefore constitutes an electrolyzer. It may also be designed as an electrolyzer having a membrane which spatially separates the anode and the cathode, so that products and/or intermediates formed on electrolysis on a diffusion from the cathode to the anode space and/or prevented vice versa. For instance, an electrochemical cell 118 such as an electrochemical cell 118 of EP3865614A1, US6132572A, US9994463B2, JP2005146344A. Further, embodiments may include a heating system 120 which may be used to heat the water supply to a desired temperature for a washing process. The water bearing electrical appliance may include a built in heater to heat the water supply. In some embodiments, the water supply line 110 may include a hot water supply line to provide heated water to the cleaning process. In some embodiments, the heating system 120 may include a container with an inlet channel and an outlet channel and in the container two spaced plates which act as electrodes and each have an electrical connection for connection to an electrical voltage source for generating a current flow I through the water between the plates, with at least one plate being movably mounted to the distance between the plates and thereby to change the volume of water provided between the plates. The plates may have a large distance from each other. A movable plate is guided in the container by means of a lever mechanism. A drive means serves to drive the lever mechanism to move the plate in order to change the parallel distance of the plate to the fixed plate. A control device is designed to switch the appropriate AC voltage to the plates and to activate the drive means in order to set the distance between the plates. The conductance of the liquid located in the container can be detected with the detection means and fed to the control device. Based on the detected conductance and the specified requirements for the water heating, the control device can activate the drive means in order to set the distance in such a way that an electrical current flow is set, which leads to the desired heating of the water. The heating system 120 is designed as a continuous-flow heater, it can also be designed as a boiler. The current is an alternating current of the same frequency due to the alternating voltage applied to the plates. Further, embodiments may include a plurality of filters 122 to capture unwanted elements from entering or exiting the water bearing electrical device 102, such as dirt, lint, harmful contaminants, etc. The filters 122 may be located within the water supply line 110 and/or at the drainage component of the water bearing electrical device 102. For instance, a filter 122 such as a filter 122 of US9994463B2. Further, embodiments may include a controller 124 which is a computing device comprised of a processor for performing computations and communicates with a memory 130 for storing data. The controller 124 is in communication with a plurality of components of the water bearing electrical device 102 and may further be allowed to control the functions of the water bearing electrical device 102. The controller 124 may be a commercially available central processing unit (CPU) or graphical processing unit (GPU) or may be a proprietary, purpose-build design. More than one controller 124 may operate in tandem and may be of different types, such as a CPU and a GPU. A GPU is not restricted to only processing graphics or image data and may be used for other computations. Further, embodiments may include a power supply 126 which may be a hardware component that supplies power to the water bearing electrical device 102. It receives power from an electrical outlet and converts the current from AC, alternating current, to DC, direct current, or may supply the alternating current, and may regulate the voltage to an adequate amount. The power supply 126 may be wired, wireless, such as through a battery. The power supply 126 may supply a current to the water bearing electrical device 102, electrochemical cell 118, gas pump 114, heating system 120, sensors 128, etc. collectively or individually. Further, embodiments may include a sensor 128 which is a measurement tool for monitoring a characteristic or metric associated with the water bearing electrical device 102. A sensor 128 may be discrete or part of an array or assembly. A sensor 128 may be a pH sensor which may be used to accurately measure acidity and alkalinity in water and other liquid substances. A sensor 128 may be a sensor to detect contamination within the water, either entering or exiting the water bearing electrical device 102, such as chemical sensors, electrochemical piezoelectric sensors, functional DNA biosensors, TOC sensors, etc. One or more of the sensors 128 may include temperature sensors, rotor position sensors, water level sensors, dirt sensors, photoelectric sensors, pressure sensors, vibration sensors, water flow sensors, proximity sensors, humidity sensors, any combination thereof, etc. The sensors 128 may be integrated into the operation of the water bearing electrical device 102 or may monitor the status of the device. In some embodiments, the data collected by the sensors 128 may be in real-time or may need to be analyzed further to produce findings. For instance, a sensor 128 such as a sensor 128 of US9702074B2, US11147650B2, and a gas sensor of EP2397062B1. Further, embodiments may include a memory 130 such as the electronic circuitry within a computing device that temporarily stores data for usage by the controller 124. The memory 130 may additionally comprise persistent data storage for storing data used by the controller 124. The memory 130 may be integrated into a controller 124 or may be a discrete component. The memory 130 may be integrated into a circuit, such as soldered on component of a single board computer (SBC) or may a removable component such as a discrete dynamic random-access memory (DRAM) stick, secure digital (SD) card, flash drive, solid state drive (SSD), magnetic hard disk drive (SSD), etc. In some embodiments, memory 130 may be part of a controller 124. Further, embodiments may include a reserve tank 132 which holds the recycled wastewater that has been treated and may contain a plurality of sensors 128 that may be used by the reuse module 142 to determine if the recycled wastewater stored in the reserve tank 132 may be used for future wash cycles. The reserve tank 132 may have a line attached to the tub 106 to be used as the water supply for a wash cycle if it is determined that the recycled wastewater is safe to use. The reserve tank 132 may also have line attached that allows the recycled wastewater to be drained, for example to a sewage line, if it is determined that the recycled wastewater cannot be used for additional wash cycles. The reserve tank 132 may also have a series of lines connected for further treatments for the recycled wastewater. The reserve tank 132 may have lines attached to it from the tub 106 and include a series of lines and valves that allow the drained wastewater from the tub 106 to be treated in a plurality of processes, such as different filters and electrochemical cells 118, or through a combination of processes. Further, embodiments may include a base module 134 which begins with the user selecting the wash cycle. The base module 134 initiates the wash module 136. The base module 134 is continuously polling to receive a signal from the wash module 136 that the wash cycle has been completed. The base module 134 receives a signal that the wash cycle has been completed from the wash module 136. The base module 134 initiates the detection module 138. The base module 134 receives the treatment for the wastewater from the detection module 138. The base module 134 sends the treatment for the wastewater to the treatment module 140. The base module 134 initiates the treatment module 140. The base module 134 receives the completion signal from the treatment module 140. The base module 134 initiates the reuse module 142. The base module 134 receives a signal from the reuse module 142. The base module 134 determines to use the water in the reserve tank 132 for the next wash cycle or to use the water from the water supply line 110. If it is determined that the water can be reused the base module 134 sends a signal to the controller 124 to use the reserve tank 132 for the next wash cycle. If it is determined that the water cannot be used the base module 134 sends a signal to the controller 124 to drain the reserve tank 132. The base module 134 sends a signal to the controller 124 to use the water from the water supply line 110 for the next wash cycle. Further, embodiments may include a wash module 136 which begins by being initiated by the base module 134. The wash module 136 receives the washing cycle from the base module 134. The wash module 136 activates the water supply. The wash module 136 provides the solution from the dosing chamber 116. The wash module 136 activates the first electrochemical cell 118. The wash module 136 feeds the solution from the electrochemical cell 118 to the bleaching facility 104. The wash module 136 determines if the water bearing electrical device has enough water supplied to perform the washing process. For example, wash module 136 is determining if enough water has been supplied to the water bearing electrical device 102, such as a washing machine, a dishwasher, a type of household or professional disinfector appliance, etc. If it is determined that not enough water has been supplied to the water bearing electrical device 102 the wash module 136 continues activating the first electrochemical cell 118 and the wash module 136 returns to determining if enough water has been supplied. If it is determined that enough water has been supplied to the water bearing electrical device 102 the wash module 136 deactivates the electrochemical cell 118. Then the wash module 136 determines if the washing cycle is complete. If it is determined that the washing cycle is not complete the washing module 136 continues the washing cycle and returns to determining if the washing cycle is complete. If it is determined that the washing cycle is complete the wash module 136 sends a completion signal to the base module 134. The washing module 136 returns to the base module 134. Further, embodiments may include a detection module 138 which begins by being initiated by the base module 134. The detection module 138 collects the sensor 128 data. The detection module 138 compares the sensor 128 data to the treatment database 144. The detection module 138 extracts the treatment from the treatment database 144. The detection module 138 sends the extracted treatment to the base module 134. The detection module 138 returns to the base module 134. Further, embodiments may include a treatment module 140 which begins by being initiated by the base module 134. The treatment module 140 receives the treatment from the base module 134. The treatment module 140 activates the electrochemical cell 118. The treatment module 140 determines if the drum 108 is empty. If it is determined that the drum 108 is not empty the treatment module 140 continues to activate the electrochemical cell 118. If it is determined that the drum 108 is empty the treatment module 140 sends a completion signal to the base module 134. The treatment module 140 returns to the base module 134. Further, embodiments may include a reuse module 142 which begins by being initiated by the base module 134. The reuse module 142 collects the sensor 128 data from the reserve tank 132. The reuse module 142 compares the sensor 128 data to the threshold database 146. The reuse module 142 determines if the sensor 128 data is over threshold set in the threshold database 146. If it is determined that the sensor data is not over the threshold the reuse module 142 sends a signal to the base module 134 to use the water stored in the reserve tank 132. If it is determined that the sensor 128 data is over the threshold the reuse module 142 drains the reserve tank 132. The reuse module 142 sends a signal to the base module 134 to use the water from the water supply line 110. The reuse module 142 returns to the base module 134. Further, embodiments may include a treatment database 144 which contains the contaminate detected by the sensors 128, the method of treating the contaminate, and the data file for the instructions for the controller 124 for the system to treat the wastewater. The treatment database 142 is used by the detection module 138 to determine the treatment process required based on the contaminates detected in the wastewater after a wash cycle has been performed. For example, the detection module 138 compares the collected sensor 128 to the treatment database 144. For example, if sensors 128 detect bacteria in the wastewater the treatment database contains the treatment for the wastewater to remove the bacteria so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines that contain different types of treatments, such as different filters to remove contaminants, different electrochemical cells 118 for to remove contaminants or treat the wastewater further, etc. Further, embodiments may include a threshold database 144 which contains a plurality of thresholds for contaminants that determine if the recycled wastewater stored in the reserve tank 132 to determine if the wastewater has been treated properly to be used again for future wash cycles. The database may contain thresholds for the water such as temperature, pH-value, suspended substances, sediment substances, total nitrogen, total phosphorus, nitrogen ammonia, chemical oxygen demand (COD), biochemical oxygen demand (BOD), anionic surfactants, etc. If the sensor 128 data is over the threshold stored in the database, then the recycled wastewater may not be used again for additional wash cycles. In some embodiments, the database may contain additional treatment processes to further treat the recycled wastewater if the sensor 128 data is close to the threshold. For example, if another treatment of using the electrochemical cell 118 to produce hydrogen peroxide would allow for the recycled wastewater to be used again then the threshold database 144 may contain the instructions, such as a data file, for the controller 124 to further treat the recycled wastewater.

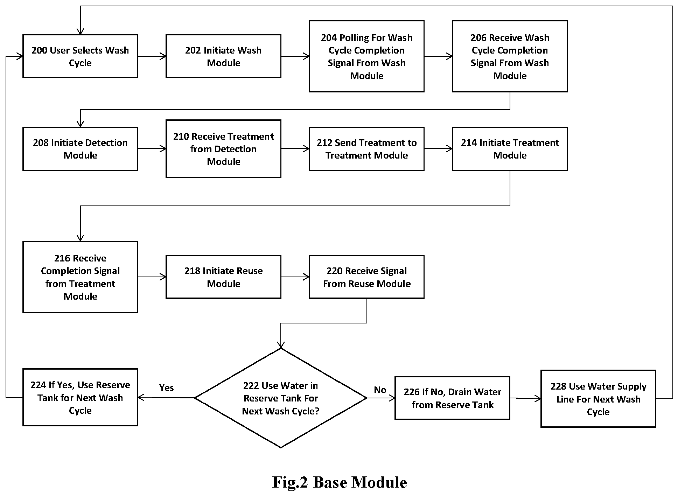

Functioning of the base module 134 will now be explained with reference to FIG. 2. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the base module 134. The process begins with the user selecting, at step 200, the wash cycle. For example, the user may select the type of wash process the water bearing electrical device 102 will perform, such as a normal wash, heavy duty, delicate, etc. Each wash process may have different types of motions performed by the drum 108, such as a different number of spins, rotations, vibrations within the bleaching facility 104. Each wash process may be performed for different periods of time to effectively wash the textiles located in the bleaching facility 104 depending on the wash cycle selected. In some embodiments, the predetermined time for the wash cycle selected may be sent to the washing module 134. The base module 134 initiates, at step 202, the wash module 136. For example, the wash module 136 begins by being initiated by the base module 134. The wash module 136 receives the washing cycle from the base module 134. The wash module 136 activates the water supply. The wash module 136 provides the solution from the dosing chamber 116. The wash module 136 activates the first electrochemical cell 118. The wash module 136 feeds the solution from the electrochemical cell 118 to the bleaching facility 104. The wash module 136 determines if the water bearing electrical device has enough water supplied to perform the washing process. For example, wash module 136 is determining if enough water has been supplied to the water bearing electrical device 102, such as a washing machine, a dishwasher, a type of household or professional disinfector appliance, etc. If it is determined that not enough water has been supplied to the water bearing electrical device 102 the wash module 136 continues activating the first electrochemical cell 118 and the wash module 136 returns to determining if enough water has been supplied. If it is determined that enough water has been supplied to the water bearing electrical device 102 the wash module 136 deactivates the electrochemical cell 118. Then the wash module 136 determines if the washing cycle is complete. If it is determined that the washing cycle is not complete the washing module 136 continues the washing cycle and returns to determining if the washing cycle is complete. If it is determined that the washing cycle is complete the wash module 136 sends a completion signal to the base module 134. The washing module 136 returns to the base module 134. The base module 134 is continuously polling, at step 204, to receive a signal from the wash module 136 that the wash cycle has been completed. For example, the base module 134 is polling for a completion signal from the wash module 136 to inform the base module 134 that the textiles in the drum 108 have completed the wash cycle. The base module 134 receives, at step 206, a signal that the wash cycle has been completed from the wash module 136. For example, the base module 134 receives a signal from the washing module 136 that the wash process is complete. In some embodiments, the wash process may be completed when a timer that is set to the length of the wash cycle selected is completed. In another embodiment, a sensor that detects the detergent is used up. In yet another embodiment, a sensor could detect the dirtiness of the wash fluid. The base module 134 initiates, at step 208, the detection module 138. For example, the detection module 138 begins with the detection module 138 being initiated by the base module 134. The detection module 138 collects the sensor 128 data. For example, the detection module 138 may collects sensor 128 data from a plurality of sensors 128 such as chemical sensors, electrochemical piezoelectric sensors, functional DNA biosensors, TOC sensors, etc. For example, the biosensors may be able to detect the presence of bacteria in the wastewater, chemical sensors may be able to detect harmful chemicals leftover from the textiles or produced by the detergent, TOC sensors may be used to detect the amount carbon in an organic compound in the wastewater, etc. In some embodiments, the sensors 128 may include a plurality of cameras or video to detect solids or dyes within the wastewater as well as determine the solids within the wastewater through image recognition. The detection module 138 compares the sensor 128 data to the treatment database 144. For example, the detection module 138 compares the collected sensor 128 to the treatment database 144. For example, if sensors 128 detect bacteria in the wastewater the treatment database contains the treatment for the wastewater to remove the bacteria so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines that contain different types of treatments, such as different filters to remove contaminants, different electrochemical cells 118 for to remove contaminants or treat the wastewater further, etc. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc. The detection module 138 extracts the treatment from the treatment database 144. For example, the detection module 138 extracts the treatment for the contaminants detected in the wastewater. For example, if the sensors 128 detected dirt in the wastewater the treatment extracted may be to drain the wastewater through a line that contains a filter to remove the dirt from the wastewater. If the sensors 128 detect oil or grease in the wastewater the treatment extracted may be to drain the wastewater through a line that contains filters, such as such as bar screens, coarse filters, oil coalescers, etc. to remove the oil or grease from the wastewater. If the sensors 128 detect bacteria the extracted treatment may be to drain the wastewater through a line that contains an electrochemical cell 118 to treat the bacteria in the wastewater. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc. The detection module 138 sends the extracted treatment to the base module 134. For example, the detection module 138 sends the extracted treatment, such as filters, electrochemical cells, or a combination of, and the corresponding data file containing the instructions for the controller 124 to treat the wastewater to the base module 134. The detection module 138 returns to the base module 134. The base module 134 receives, at step 210, the treatment for the wastewater from the detection module 138. For example, the base module 134 receives the treatment for the contaminants detected in the wastewater. For example, if the sensors 128 detected dirt in the wastewater the treatment may be to drain the wastewater through a line that contains a filter to remove the dirt from the wastewater. If the sensors 128 detect oil or grease in the wastewater the treatment may be to drain the wastewater through a line that contains filters, such as such as bar screens, coarse filters, oil coalescers, etc. to remove the oil or grease from the wastewater. If the sensors 128 detect bacteria the treatment may be to drain the wastewater through a line that contains an electrochemical cell 118 to treat the bacteria in the wastewater. The treatment, such as filters, electrochemical cells, or a combination of, and the corresponding data file containing the instructions for the controller 124 to treat the wastewater are received by the base module 134. The base module 134 sends, at step 212, the treatment for the wastewater to the treatment module 140. For example, the base module 134 sends the treatment for the contaminants detected in the wastewater. For example, if the sensors 128 detected dirt in the wastewater the treatment may be to drain the wastewater through a line that contains a filter to remove the dirt from the wastewater. If the sensors 128 detect oil or grease in the wastewater the treatment may be to drain the wastewater through a line that contains filters, such as such as bar screens, coarse filters, oil coalescers, etc. to remove the oil or grease from the wastewater. If the sensors 128 detect bacteria the treatment may be to drain the wastewater through a line that contains an electrochemical cell 118 to treat the bacteria in the wastewater. The treatment, such as filters, electrochemical cells, or a combination of, and the corresponding data file containing the instructions for the controller 124 to treat the wastewater are sent by the base module 134. The base module 134 initiates, at step 214, the treatment module 140. For example, the treatment module 140 begins by being initiated by the base module 134. The treatment module 140 receives the treatment from the base module 134. The treatment module 140 activates the electrochemical cell 118. The treatment module 140 determines if the drum 108 is empty. If it is determined that the drum 108 is not empty the treatment module 140 continues to activate the electrochemical cell 118. If it is determined that the drum 108 is empty the treatment module 140 sends a completion signal to the base module 134. The treatment module 140 returns to the base module 134. The base module 134 receives, at step 216, the completion signal from the treatment module 140. For example, the base module 134 receives a signal from the treatment module 140 that the tub 106 has been drained and the wastewater has been treated and is stored in the reserve tank 132. The base module 134 initiates, at step 218, the reuse module 142. For example, the reuse module 142 begins by being initiated by the base module 134. The reuse module 142 collects the sensor 128 data from the reserve tank 132. For example, the reserve tank 132 may contain a plurality of sensors 128 including chemical sensors, electrochemical piezoelectric sensors, functional DNA biosensors, TOC sensors, etc. One or more of the sensors 128 may include temperature sensors, rotor position sensors, water level sensors, dirt sensors, photoelectric sensors, pressure sensors, vibration sensors, water flow sensors, proximity sensors, humidity sensors, any combination thereof, etc. The reuse module 142 compares the sensor 128 data to the threshold database 146. For example, the collected sensor 128 data may be compared to the threshold database 146 which contains a plurality of thresholds for contaminants that determine if the recycled wastewater stored in the reserve tank 132 to determine if the wastewater has been treated properly to be used again for future wash cycles. The database may contain thresholds for the water such as temperature, pH-value, suspended substances, sediment substances, total nitrogen, total phosphorus, nitrogen ammonia, chemical oxygen demand (COD), biochemical oxygen demand (BOD), anionic surfactants, etc. The reuse module 142 determines if the sensor 128 data is over threshold set in the threshold database 146. For example, the reuse module 142 determines if any of the sensor 128 data collected from the reserve tank 132 are over the predetermined thresholds stored in the threshold database 146 in order to determine if the recycled wastewater is safe to be reused in future wash cycles. If it is determined that the sensor data is not over the threshold the reuse module 142 sends a signal to the base module 134 to use the water stored in the reserve tank 132. For example, if it is determined that the recycled wastewater is not over any threshold stored in the threshold database 146 the reuse module 142 sends a signal to the base module 134 to use the water stored in the reserve tank 132 for the next wash cycle. If it is determined that the sensor 128 data is over the threshold the reuse module 142 drains the reserve tank 132. For example, if the recycled wastewater is over any of the predetermined thresholds stored in the threshold database 146 the reuse module 142 drains the recycled wastewater in the reserve tank 132. In some embodiments, the recycled wastewater may be treated again by treating the recycled wastewater another time by a series of filters, electrochemical cells 118, etc. to determine if further treating the recycled wastewater would allow for the water to be used again. If the recycled wastewater is treated a second time, or a number of times, the wastewater would be stored again in the reserve tank 132 and the sensors 128 would collect sensor 128 data to determine if the additional treatment processes bring the sensor 128 data to a level in which the recycled wastewater may be used again. The reuse module 142 sends a signal to the base module 134 to use the water from the water supply line 110. For example, the reuse module 142 sends a signal to the base module 134 that the recycled wastewater has been drained and that the water supply line 110 should be used for the next wash cycle. The reuse module 142 returns to the base module 134. The base module 134 receives, at step 220, a signal from the reuse module 142. For example, the base module 134 may receive a signal from the reuse module 142 to use the water stored in the reserve tank 132 for the next wash cycle if it has been determined that the recycled wastewater is not over any threshold stored in the threshold database 146. The base module 134 may receive a signal from the reuse module 142 that the recycled wastewater has been drained and that the water supply line 110 should be used for the next wash cycle if it has been determined that the recycled wastewater is over a threshold in threshold database 146. The base module 134 determines, at step 222, to use the water in the reserve tank 132 for the next wash cycle or to use the water from the water supply line 110. For example, the base module 134 may receive a signal from the reuse module 142 to either use the recycled water from the reserve tank 132 or use the water supply line 110 to provide water for the next wash cycle. For example, the reuse module 142 collects the sensor 128 data from the reserve tank 132. For example, the reserve tank 132 may contain a plurality of sensors 128 including chemical sensors, electrochemical piezoelectric sensors, functional DNA biosensors, TOC sensors, etc. One or more of the sensors 128 may include temperature sensors, rotor position sensors, water level sensors, dirt sensors, photoelectric sensors, pressure sensors, vibration sensors, water flow sensors, proximity sensors, humidity sensors, any combination thereof, etc. Then reuse module 142 compares the sensor 128 data to the threshold database 146. For example, the collected sensor 128 data may be compared to the threshold database 146 which contains a plurality of thresholds for contaminants that determine if the recycled wastewater stored in the reserve tank 132 to determine if the wastewater has been treated properly to be used again for future wash cycles. The database may contain thresholds for the water such as temperature, pH-value, suspended substances, sediment substances, total nitrogen, total phosphorus, nitrogen ammonia, chemical oxygen demand (COD), biochemical oxygen demand (BOD), anionic surfactants, etc. The reuse module 142 then determines if the sensor 128 data is over threshold set in the threshold database 146. For example, the reuse module 142 determines if any of the sensor 128 data collected from the reserve tank 132 are over the predetermined thresholds stored in the threshold database 146 in order to determine if the recycled wastewater is safe to be reused in future wash cycles. If it is determined that the sensor data is not over the threshold the reuse module 142 sends a signal to the base module 134 to use the water stored in the reserve tank 132. For example, if it is determined that the recycled wastewater is not over any threshold stored in the threshold database 146 the reuse module 142 sends a signal to the base module 134 to use the water stored in the reserve tank 132 for the next wash cycle. If it is determined that the sensor 128 data is over the threshold the reuse module 142 drains the reserve tank 132. For example, if the recycled wastewater is over any of the predetermined thresholds stored in the threshold database 146 the reuse module 142 drains the recycled wastewater in the reserve tank 132. In some embodiments, the recycled wastewater may be treated again by treating the recycled wastewater another time by a series of filters, electrochemical cells 118, etc. to determine if further treating the recycled wastewater would allow for the water to be used again. If the recycled wastewater is treated a second time, or a number of times, the wastewater would be stored again in the reserve tank 132 and the sensors 128 would collect sensor 128 data to determine if the additional treatment processes bring the sensor 128 data to a level in which the recycled wastewater may be used again. Then the reuse module 142 sends a signal to the base module 134 to use the water from the water supply line 110. For example, the reuse module 142 sends a signal to the base module 134 that the recycled wastewater has been drained and that the water supply line 110 should be used for the next wash cycle. If it is determined that the water can be reused the base module 134 sends, at step 224, a signal to the controller 124 to use the reserve tank 132 for the next wash cycle. In some embodiments, the signal received from the reuse module 142 may be to dilute the recycled wastewater stored in the reserve tank 132 with water from the water supply line 110 to allow the recycled wastewater to be used. For example, if the pH balance of the recycled water in the reserve tank 132 is almost neutral, for example a 6 or 8 on the pH scale, then water from the water supply line 110 may be added to bring the water in the reserve tank to neutral and be allowed to be used for the next wash cycle. In some embodiments, the recycled wastewater stored in the reserve tank 132 may be continued to be stored and the water from the water supply line 110 is used for the next wash cycle. For example, if the user decides to perform another wash cycle but the water stored in the reserve tank 132 requires another treatment process and is currently unavailable to be used in the wash cycle. In some embodiments, the water stored in the reserve tank 132 may be used for the wash cycle and water from the water supply line 110 may be used for a rinse cycle, or vice versa, or a combination of both for the wash cycle and rinse cycle. If it is determined that the water cannot be used the base module 134 sends, at step 226, a signal to the controller 124 to drain the reserve tank 132. The base module 134 sends, at step 228, a signal to the controller 124 to use the water from the water supply line 110 for the next wash cycle. In some embodiments, the recycled wastewater stored in the reserve tank 132 may be continued to be stored and the water from the water supply line 110 is used for the next wash cycle. For example, if the user decides to perform another wash cycle but the water stored in the reserve tank 132 requires another treatment process and is currently unavailable to be used in the wash cycle. In some embodiments, the water stored in the reserve tank 132 may be used for the wash cycle and water from the water supply line 110 may be used for a rinse cycle, or vice versa, or a combination of both for the wash cycle and rinse cycle.

Functioning of the wash module 136 will now be explained with reference to FIG. 2. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the wash module 136. The process begins with the wash module 136 being initiated, at step 300, by the base module 134. The wash module 136 receives, at step 302, the washing cycle from the base module 134. For example, the type of wash cycle selected by the user, including the length in which the washing process will be performed may be sent by the base module 134. In some embodiments, the base module 134 may store the washing cycle selected by the user in a database and send the database to the wash module 136, which may include the washing cycle selected, the length of time the washing cycle takes, the amount of water required for the washing cycle, how long the electrochemical cell 118 is activated for, the number of rotations, spins, vibrations, etc. the drum will perform, etc. The wash module 136 activates, at step 304, the water supply. For example, the wash module 136 activates the water supply by sending a signal to the controller 124 to open the valve 112 in the water supply line 110 to send the water to the electrochemical cell 118. In some embodiments, the valve 112 may be opened for a predetermined amount of time depending on the washing cycle the user selected. In some embodiments, the amount of water provided for the washing cycle may be dependent on sensor 128 data collected from a water pressure sensor to detect the water pressure for a period of time and once a predetermined amount of time has elapsed at a certain water pressure the valve 112 is closed. In some embodiments, the wash module 136 may use the water stored in a reserve tank 132 which contains cleaned and sanitized wastewater from a previous wash cycle which is determined by the process described in the reuse module 142 and the reuse module 142 may send a signal to the base module 134 to either use the recycled water stored in the reserve tank 132 or to use the water from the water supply line 110 and the base module 134 may send a signal to the wash module 136 for which water source to use for the upcoming wash cycle. The wash module 136 provides, at step 306, the solution from the dosing chamber 116. For example, when the electrochemical cell 118 is supplied with water in a predetermined quantity, the solution containing salt and possibly a detergent is metered from the dosing chamber 116 into the electrochemical cell 118 via the metering pump. The wash module 136 activates, at step 308, the first electrochemical cell 118. For example, the wash module 136 may send a signal to the controller 124 to activate the electrochemical cell 118 by sending a specific voltage to the electrochemical cell 118, such as 1.2 volts. The electrochemical cell 118 may produce hydrogen peroxide as the water supply passes through the electrochemical cell 118, as well as being supplied the solution from the dosing chamber 116. In some embodiments, the electrochemical cell 118 may utilize a sensor 128 to measure the correct voltage to produce hydrogen peroxide, for example, by using a hydrogen peroxide sensor 128. The wash module 136 feeds, at step 310, the solution from the electrochemical cell 118 to the bleaching facility 104. For example, the wash module 136 feeds the hydrogen peroxide solution into the bleaching facility 104 in order to wash the textiles contained in the bleaching facility 104. The wash module 136 determines, at step 312, if the water bearing electrical device has enough water supplied to perform the washing process. For example, wash module 136 is determining if enough water has been supplied to the water bearing electrical device 102, such as a washing machine, a dishwasher, a type of household or professional disinfector appliance, etc. For example, the water supply line 110 may be activated for a predetermined amount of time to provide enough water to properly perform the washing process depending on the wash cycle selected by the user. In some embodiments, the amount of water provided may be predetermined based on the wash cycle selected and measured using sensor 128 readings from sensors 128 located in the water supply line 110, such as pressure sensors 128 that measure the water pressure, and that water pressure may have to be maintained for a predetermined amount of time. In some embodiments, the wash module 136 may collect data from a sensor 128 located within the tub 106 to determine if the water level within the tub 106 has reached the appropriate amount to perform the washing cycle selected by the user. In some embodiments, the water level may be determined by using a sensor 128 located within the line between the electrochemical cell 118 and the bleaching facility 104 to determine how long the tub 106 has been filling up with the hydrogen peroxide solution from the electrochemical cell 118. In some embodiments, the wash module 136 may be continuously polling the sensor 128 located within the tub 106 to determine if the water level has reached the predetermined level. If it is determined that not enough water has been supplied to the water bearing electrical device 102 the wash module 136 continues activating, at step 314, the first electrochemical cell 118 and the wash module 136 returns to determining if enough water has been supplied. For example, the water supply line 110 may be activated for a predetermined amount of time to provide enough water to properly perform the washing process depending on the wash cycle selected by the user. In some embodiments, the amount of water provided may be predetermined based on the wash cycle selected and measured using sensor 128 readings from sensors 128 located in the water supply line 110, such as pressure sensors 128 that measure the water pressure, and that water pressure may have to be maintained for a predetermined amount of time. If it is determined that enough water has been supplied to the water bearing electrical device 102 the wash module 136 deactivates, at step 316, the electrochemical cell 118. For example, the wash module 136 may deactivate the electrochemical cell 118 by sending a signal to the controller 124 to stop supplying the voltage to the electrochemical cell 118, as well as sending a signal to the controller 124 to close the valve 112 located within the water supply line 110. Then the wash module 136 determines, at step 318, if the washing cycle is complete. For example, the wash module 136 may use a predetermined amount of time for each washing cycle selected by the user as well as a predetermined number of spins, rotations, vibrations, etc. for each washing cycle and once the predetermined amount of time or spins, rotations, vibrations, etc. have been performed the washing cycle is complete. If it is determined that the washing cycle is not complete the wash module 136 continues, at step 320, the washing cycle and returns to determining if the washing cycle is complete. If it is determined that the washing cycle is complete the wash module 136 sends, at step 322, a completion signal to the base module 134. For example, the wash module 136 sends a signal to the base module 134 to inform the base module 134 that the washing cycle selected by the user is complete. The wash module 136 returns, at step 324, to the base module 134.

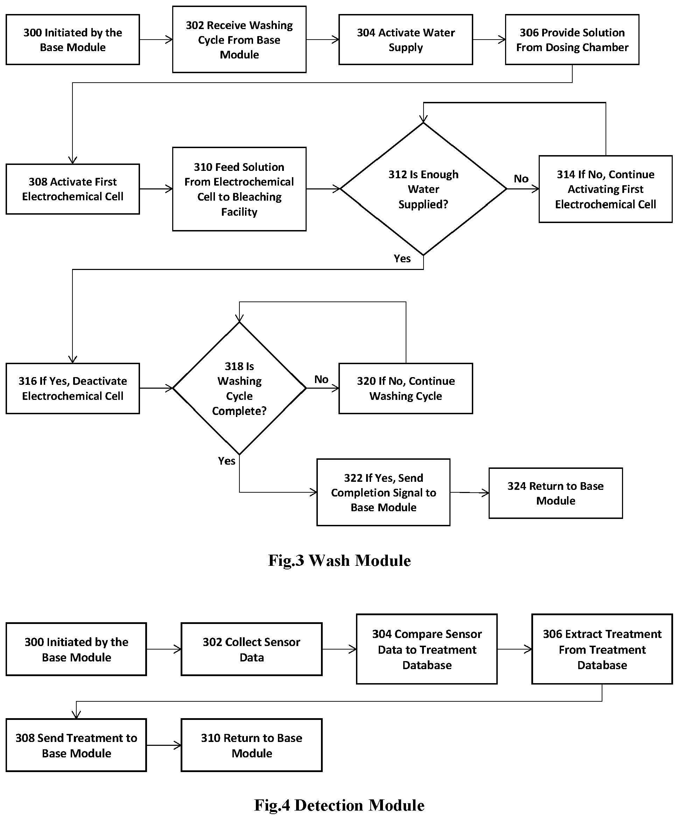

Functioning of the detection module 138 will now be explained with reference to FIG. 3. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the detection module 138. The process begins with the detection module 138 being initiated, at step 400, by the base module 134. The detection module 138 collects, at step 402, the sensor 128 data. For example, the detection module 138 may collects sensor 128 data from a plurality of sensors 128 such as chemical sensors, electrochemical piezoelectric sensors, functional DNA biosensors, TOC sensors, etc. For example, the biosensors may be able to detect the presence of bacteria in the wastewater, chemical sensors may be able to detect harmful chemicals leftover from the textiles or produced by the detergent, TOC sensors may be used to detect the amount carbon in an organic compound in the wastewater, etc. In some embodiments, the sensors 128 may include a plurality of cameras or video to detect solids or dyes within the wastewater as well as determine the solids within the wastewater through image recognition. The detection module 138 compares, at step 404, the sensor 128 data to the treatment database 144. For example, the detection module 138 compares the collected sensor 128 to the treatment database 144. For example, if sensors 128 detect bacteria in the wastewater the treatment database contains the treatment for the wastewater to remove the bacteria so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines that contain different types of treatments, such as different filters to remove contaminants, different electrochemical cells 118 for to remove contaminants or treat the wastewater further, etc. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc. The detection module 138 extracts, at step 406, the treatment from the treatment database 144. For example, the detection module 138 extracts the treatment for the contaminants detected in the wastewater. For example, if the sensors 128 detected dirt in the wastewater the treatment extracted may be to drain the wastewater through a line that contains a filter to remove the dirt from the wastewater. If the sensors 128 detect oil or grease in the wastewater the treatment extracted may be to drain the wastewater through a line that contains filters, such as such as bar screens, coarse filters, oil coalescers, etc. to remove the oil or grease from the wastewater. If the sensors 128 detect bacteria the extracted treatment may be to drain the wastewater through a line that contains an electrochemical cell 118 to treat the bacteria in the wastewater. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc. The detection module 138 sends, at step 408, the extracted treatment to the base module 134. For example, the detection module 138 sends the extracted treatment, such as filters, electrochemical cells, or a combination of, and the corresponding data file containing the instructions for the controller 124 to treat the wastewater to the base module 134. The detection module 138 returns, at step 410, to the base module 134.

Functioning of the treatment module 140 will now be explained with reference to FIG. 4. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the treatment module 140. The process begins with the treatment module 140 being initiated, at step 500, by the base module 134. The treatment module 140 receives, at step 502, the treatment from the base module 134. For example, the treatment module 140 receives the treatment for the contaminants detected in the wastewater. For example, if the sensors 128 detected lint in the wastewater the treatment received may be to drain the wastewater through a line that contains a filter to remove the lint from the wastewater. If the sensors 128 detect oil or grease in the wastewater the treatment received may be to drain the wastewater through a line that contains filters, such as such as bar screens, coarse filters, oil coalescers, etc. to remove the oil or grease from the wastewater. If the sensors 128 detect bacteria the received treatment may be to drain the wastewater through a line that contains an electrochemical cell 118 to treat the bacteria in the wastewater. The treatment, such as filters, electrochemical cells, or a combination of, and the corresponding data file containing the instructions for the controller 124 to treat the wastewater are received by the base module 134. The treatment module 140 sends, at step 504, the received treatment to the controller 124. For example, the treatment module 140 may send the treatment to the controller 124. The controller 124 may open or close a series valve to a series of lines containing the required treatment or plurality of treatments for the wastewater. For example, if lint was detected in the wastewater the treatment may be to open a valve from the drum 108 that allows the wastewater to flow through a line that contains a filter to remove the lint from the wastewater. If oil or grease was detected in the wastewater the treatment may be to open a valve from the drum 108 that allows the wastewater to flow through a line that contains filters, such as such as bar screens, coarse filters, oil coalescers, etc. to remove the oil or grease from the wastewater. If any bacteria were detected the treatment may be to open a valve from the drum 108 that allows the wastewater to flow through a line that contains an electrochemical cell 118 to treat the bacteria in the wastewater. The treatment module 140 activates, at step 504, the treatment by sending a signal to the controller 124 to activate the necessary components to treat the wastewater. For example, if the treatment required involves the electrochemical cell 118 the treatment module 140 may activate the electrochemical cell 118 by sending a signal to the controller 124 to activate the electrochemical cell 118. For example, the electrochemical cell 118 may be second electrochemical cell 118 specifically designed to treat wastewater. The second electrochemical cell 118 may be designed to perform electrocoagulation which is a technique used for wastewater treatment by removing contaminants that are more difficult to be removed by filtration or chemical treatment systems. The second electrochemical cell 118 may be made up of an electrolytic cell with one anode and one cathode. When connected to an external power source, the anode material will electrochemically corrode due to oxidation, while the cathode will be subjected to passivation. It consists of pairs of conductive metal plates in parallel, which act as monopolar electrodes. It furthermore requires a direct current power source, a resistance box to regulate the current density and a multimeter to read the current values. The conductive metal plates are commonly known as sacrificial electrodes. The sacrificial anode lowers the dissolution potential of the anode and minimizes the passivation of the cathode. The sacrificial anodes and cathodes can be of the same or of different materials. The arrangement of monopolar electrodes with cells in series is electrically similar to a single cell with many electrodes and interconnections. In series cell arrangement, a higher potential difference is required for a given current to flow because the cells connected in series have higher resistance. The same current would, however, flow through all the electrodes. In contrast, in parallel or bipolar arrangement the electric current is divided between all the electrodes in relation to the resistance of the individual cells, and each face on the electrode has a different polarity. During electrolysis, the positive side undergoes anodic reactions, while on the negative side, cathodic reactions are encountered. Consumable metal plates, such as iron or aluminum, are usually used as sacrificial electrodes to continuously produce ions in the water. The released ions neutralize the charges of the particles and thereby initiate coagulation. The released ions remove undesirable contaminants either by chemical reaction and precipitation, or by causing the colloidal materials to coalesce, which can then be removed by flotation. In addition, as water containing colloidal particulates, oils, or other contaminants move through the applied electric field, there may be ionization, electrolysis, hydrolysis, and free-radical formation which can alter the physical and chemical properties of water and contaminants. As a result, the reactive and excited state causes contaminants to be released from the water and destroyed or made less soluble. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc. The treatment module 140 determines, at step 506, if the tub 106 is empty. For example, there may be sensor 128 located at the bottom of the tub 106 to detect the water level of the tub 106 and if the collected data informs the treatment module 140 that the water level is below the sensor 128, for example reading no more water, then the tub 106 is emptied. If it is determined that the tub 106 is not empty the treatment module 140 continues, at step 508, to activate the electrochemical cell 118. For example, if the drum 108 is not emptied the treatment module 140 continues to activate the electrochemical cell 118 by supplying power, voltage, or current to the electrochemical cell 118. If it is determined that the tub 106 is empty the treatment module 140 sends, at step 510, a completion signal to the base module 134. For example, once the tub 106 is emptied the treatment module 140 deactivates the electrochemical cell 118 by no longer supplying the electrochemical cell 118 with a current and sends a signal to the base module 134 a completion signal that the tub 106 has been drained. The treated wastewater may be sent to the reserve tank 132 and may be reused by placing the treated wastewater in the reserve tank 132 that may be used for another wash process. In some embodiments, if the treated wastewater is to be used again there may be a plurality of sensors 128 located in the reserve tank 132 to determine if the treated wastewater is contamination free or past a predetermined threshold to empty the storage tank or use the water supply line 110 for the next wash process. The treatment module 140 returns, at step 512, to the base module 134.

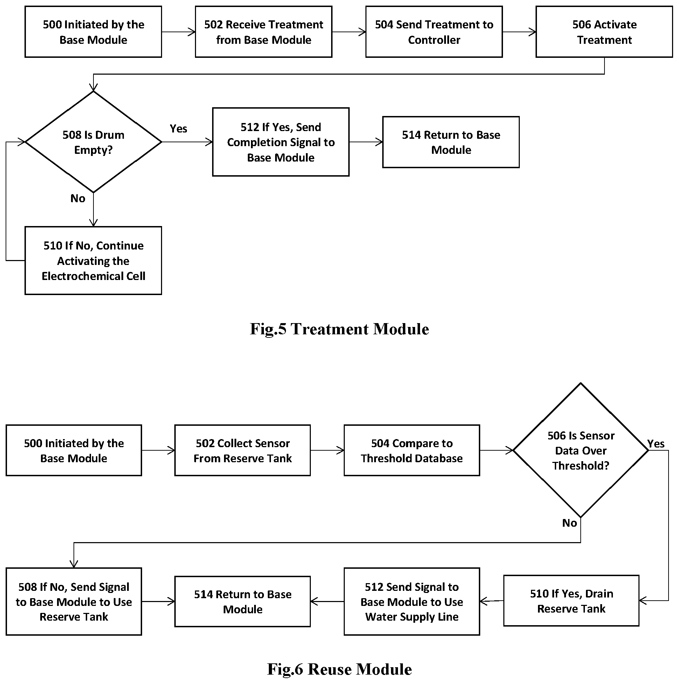

Functioning of the reuse module 142 will now be explained with reference to FIG. 5. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the reuse module 142. The process begins with the reuse module 142 being initiated, at step 600, by the base module 134. The reuse module 142 collects, at step 602, the sensor 128 data from the reserve tank 132. For example, the reserve tank 132 may contain a plurality of sensors 128 including chemical sensors, electrochemical piezoelectric sensors, functional DNA biosensors, TOC sensors, etc. One or more of the sensors 128 may include temperature sensors, rotor position sensors, water level sensors, dirt sensors, photoelectric sensors, pressure sensors, vibration sensors, water flow sensors, proximity sensors, humidity sensors, any combination thereof, etc. The reuse module 142 compares, at step 604, the sensor 128 data to the threshold database 146. For example, the collected sensor 128 data may be compared to the threshold database 146 which contains a plurality of thresholds for contaminants that determine if the recycled wastewater stored in the reserve tank 132 to determine if the wastewater has been treated properly to be used again for future wash cycles. The database may contain thresholds for the water such as temperature, pH-value, suspended substances, sediment substances, total nitrogen, total phosphorus, nitrogen ammonia, chemical oxygen demand (COD), biochemical oxygen demand (BOD), anionic surfactants, etc. The reuse module 142 determines, at step 606, if the sensor 128 data is over threshold set in the threshold database 146. For example, the reuse module 142 determines if any of the sensor 128 data collected from the reserve tank 132 are over the predetermined thresholds stored in the threshold database 146 in order to determine if the recycled wastewater is safe to be reused in future wash cycles. If it is determined that the sensor data is not over the threshold the reuse module 142 sends, at step 608, a signal to the base module 134 to use the water stored in the reserve tank 132. For example, if it is determined that the recycled wastewater is not over any threshold stored in the threshold database 146 the reuse module 142 sends a signal to the base module 134 to use the water stored in the reserve tank 132 for the next wash cycle. If it is determined that the sensor 128 data is over the threshold the reuse module 142 drains, at step 610, the reserve tank 132. For example, if the recycled wastewater is over any of the predetermined thresholds stored in the threshold database 146 the reuse module 142 drains the recycled wastewater in the reserve tank 132. In some embodiments, the recycled wastewater may be treated again by treating the recycled wastewater another time by a series of filters, electrochemical cells 118, etc. to determine if further treating the recycled wastewater would allow for the water to be used again. If the recycled wastewater is treated a second time, or a number of times, the wastewater would be stored again in the reserve tank 132 and the sensors 128 would collect sensor 128 data to determine if the additional treatment processes bring the sensor 128 data to a level in which the recycled wastewater may be used again. The reuse module 142 sends, at step 612, a signal to the base module 134 to use the water from the water supply line 110. For example, the reuse module 142 sends a signal to the base module 134 that the recycled wastewater has been drained and that the water supply line 110 should be used for the next wash cycle. The reuse module 142 returns, at step 614, to the base module 134.

Functioning of the treatment database 144 will now be explained with reference to FIG. 6. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the treatment database 144. The database contains the contaminate detected by the sensors 128, the method of treating the contaminate, and the data file for the instructions for the controller 124 for the system to treat the wastewater. The treatment database 142 is used by the detection module 138 to determine the treatment process required based on the contaminates detected in the wastewater after a wash cycle has been performed. For example, the detection module 138 compares the collected sensor 128 to the treatment database 144. For example, if sensors 128 detect soil contamination, such as pesticides, petroleum products, radon, asbestos, lead, etc., in the wastewater the treatment database contains the treatment for the wastewater to remove the soil contamination so the water may be reused in future wash cycles. In some embodiments, the treatment database 144 may contain a plurality of contaminants, treatments and data files for the system to perform the treatments on the wastewater. For example, the data file for each treatment may send the wastewater through a series of lines or pipes that contain different types of treatments, such as different filters to remove contaminants, different electrochemical cells 118, adsorption, UV disinfection treatments, etc. to remove contaminants or treat the wastewater further depending on the contaminants that were detected by the sensors 128. In some embodiments, the wastewater may go through a treatment process in which the wastewater is treated through a process involving one or a combination of treatments including, but not limited to, electrocoagulation, filtration, oxidation, electrochemical cells 118, biological methods, ion exchange, adsorption, etc.

Functioning of the threshold database 146 will now be explained with reference to FIG. 2. One skilled in the art will appreciate that, for this and other processes and methods disclosed herein, the functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

This figure displays the threshold database 146. The database contains a plurality of thresholds for contaminants that determine if the recycled wastewater stored in the reserve tank 132 to determine if the wastewater has been treated properly to be used again for future wash cycles. The database may contain thresholds for the water such as temperature, pH-value, bacteria, dyes, soil contaminates, suspended substances, sediment substances, total nitrogen, total phosphorus, nitrogen ammonia, chemical oxygen demand (COD), biochemical oxygen demand (BOD), anionic surfactants, etc. If the sensor 128 data is over the threshold stored in the database, then the recycled wastewater may not be used again for additional wash cycles. In some embodiments, the database may contain additional treatment processes to further treat the recycled wastewater if the sensor 128 data is close to the threshold. For example, if another treatment of using the electrochemical cell 118 to produce hydrogen peroxide would allow for the recycled wastewater to be used again then the threshold database 144 may contain the instructions, such as a data file, for the controller 124 to further treat the recycled wastewater. For example, if the recycled wastewater would require another filtration water treatment to remove solid contaminants, then the threshold database 144 may contain the instructions, such as a data file, for the controller 124 to further treat the recycled wastewater.

The functions performed in the processes and methods may be implemented in differing order. Furthermore, the outlined steps and operations are only provided as examples, and some of the steps and operations may be optional, combined into fewer steps and operations, or expanded into additional steps and operations without detracting from the essence of the disclosed embodiments.

## Claims

1. A method for recycling laundry wastewater; comprising:
• determining the completion of a wash process, and
• collecting sensor data on the wastewater generated from the wash process, and
• determining a treatment for the wastewater, and
• treating the wastewater with an electrochemical cell, and
• testing the recycled wastewater, and
• determining if the recycled wastewater is properly treated to be used in future wash processes.
